# DEMANDE DE BREVET EUROPEEN

(11) **EP 1 433 993 A1**
(43) Date de publication de la demande: **30.06.2004**
(21) Numéro de dépôt: 03293284.0
(22) Date de dépôt: 22.12.2003
(51) Int. Cl.: F16L 51/04

(54) **Tube sensiblement rigide pour circuit haute pression**

(30) Priorité: 26.12.2002 FR 0216704
(71) Demandeur: Renault s.a.s., 92100 Boulogne Billancourt (FR)
(72) Inventeur: Babayou, Laurent, 92500 Rueil Malmaison (FR); Mallet, Philippe, 78810 Feucherolles (FR)
(74) Mandataire: Rougemont, Bernard

(57) **Abrégé**

L'invention concerne un tube (1) sensiblement rigide, notamment pour un circuit hydraulique à haute pression, comprenant une section médiane (2) longitudinale et des première (3) et seconde (4) sections extrêmes longitudinales s'étendant respectivement suivant des première (5) et seconde (6) orientations et séparées de la section médiane (2) par des premier (7) et second (8) coudes respectifs espacés l'un de l'autre par une , distance initiale (9) prédéterminée.

Le tube est essentiellement caractérisé en ce que la section médiane comprend au moins un repli (10), ou circonvolution (10), susceptible d'être déplié, ce dont il résulte que la distance entre les premier (7) et second (8) coudes peut être augmentée sans modification des première (5) et seconde orientations (6).

## Description

La présente invention concerne, de façon générale, un tube coudé, sensiblement rigide principalement destiné au transport de fluides haute pression. Ce tube est destiné à être monté entre deux raccords fixes distants l'un de l'autre et dont la distance est susceptible de varier.

Plus particulièrement, l'invention concerne un tube sensiblement rigide, notamment pour un circuit hydraulique à haute pression, comprenant une section médiane longitudinale et des première et seconde sections extrêmes longitudinales s'étendant respectivement suivant des première et seconde orientations et séparées de la section médiane par des premier et second coudes respectifs espacés l'un de l'autre par une distance initiale prédéterminée.

De tels tubes sensiblement rigides sont généralement destinés à être assemblés à leurs extrémités avec des raccords pour fluide haute pression. En raison des fortes pressions des fluides transportés qui avoisinent fréquemment les 1600 bars, les tubes sont en matériaux rigides résistants. Le montage de tels tubes sensiblement rigides entre des raccords fixes requiert une grande précision d'usinage du tube ainsi qu'une précision dans le positionnement des raccords fixes. La distance séparant les deux raccords doit être pratiquement identique à la distance séparant les sections extrêmes du tube à raccorder. De plus, l'orientation de chacune des sections extrêmes doit être approximativement la même que l'orientation de l'axe du raccord sur lequel chaque section doit être raccordée.
En cas de défaut de positionnement ou de variation dimensionnelle trop importante, il arrive que le tube ne puisse être raccordé avec les raccords fixes. Dans certains cas, des ajustements manuels sont nécessaires. Dans d'autres cas, le défaut de parallélisme existant entre une section extrême et le raccord correspondant peut entraîner des fuites au niveau des raccords haute pression. Afin d'éviter cet inconvénient de tels tubes ont généralement des tolérances dimensionnelles de fabrication très précises et sont dès lors coûteux à fabriquer.

C'est la raison pour laquelle de nombreux fabricants de raccords et de tubes ont développé diverses solutions visant à réduire les exigences dimensionnelles et géométriques requises par de tels assemblages raccords / tube.

Un tube du type précédemment défini, admettant une telle dispersion dimensionnelle, est par exemple représenté aux figures I et II.
La figure I représente un tube rigide ayant des première 5 et seconde 6 orientations sensiblement parallèles entre elles. Les première 3 et seconde 4 sections extrêmes sont éloignées d'une distance initiale prédéterminée 9. Au moment de l'assemblage du tube avec des raccords fixes, la distance d'entraxe entre les raccords est fréquemment différente de la distance initiale prédéterminée 9. Dans ce cas, il est nécessaire de rapprocher ou d'éloigner la première portion de raccordement 11 de la première section extrême 3 de la seconde portion de raccordement 12 de la seconde section extrême 4.
Dans le cas particulier de la figure II, les portions de raccordement 11 et 12 sont écartées afin d'être connectées sur les raccords. La variation de la distance entre les portions de raccordement des sections extrêmes entraîne un pivotement de ces sections autour de coudes et corrélativement entraîne une variation des première 5 et seconde 6 orientations longitudinales.
Lorsque le défaut d'orientation des sections extrêmes 3 et 4 est trop important par rapport au défaut maximum d'orientation admissible par un raccord haute pression fixes, le tube ne peut être monté. Dans certains cas, afin de compenser la différence d'orientation des sections extrêmes 3 et 4 par rapport aux raccords, le montage est réalisé en force, entraînant le risque de fuite ultérieure entre le raccord et le tube rigide.

D'autres solutions de l'art antérieur utilisent des raccords haute pression à rotule. De tels raccords permettent une variation de l'orientation angulaire de l'entrée du raccord par rapport à sa sortie, ce dont il résulte une facilité de montage accrue et une réduction importante des contraintes géométriques de fabrication du tube rigide.

De tels raccords rotule ne permettent cependant pas de faire varier la distance initiale 9 entre les coudes du tube. Le montage d'un tube rigide de distance initiale trop grande ou trop courte par rapport à la distance initiale entre les raccords fixes reste dès lors impossible ou difficile à réaliser. Enfin, les raccords rotule sont particulièrement coûteux à fabriquer.

Dans ce contexte, la présente invention a pour but de proposer un tube sensiblement rigide permettant d'accepter des variations de la distance initiale prédéterminée sans modification des première et seconde orientations.

A cette fin, le tube sensiblement rigide de l'invention, par ailleurs conforme à la définition générique qu'en donne le préambule ci-dessus, est essentiellement caractérisé en ce que la section médiane comprend au moins un repli, ou circonvolution, susceptible d'être déplié, ce dont il résulte que la distance entre les premier et second coudes peut être augmentée sans modification des première et seconde orientations.

Chaque repli ou circonvolution du tube crée une zone de flexion privilégiée du tube. Ainsi, lorsqu'une force de rapprochement ou d'écartement des coudes est exercée sur le tube, celui-ci se fléchit légèrement au niveau des zones de flexion privilégiées.
Les circonvolutions présentant des zones de flexion jouent ainsi le rôle d'une sorte de ressort de forte raideur. L'utilisation des zones de flexion des circonvolutions du tube permet dans une certaine limite de faire varier la distance initiale prédéterminée sans produire de déformation du tube au niveau des premier et second coudes, et corrélativement sans modification importante des première et seconde orientations.

D'autres caractéristiques et avantages de l'invention ressortiront clairement de la description qui en est faite ci-après, à titre indicatif et nullement limitatif, en référence aux dessins annexés, dans lesquels:

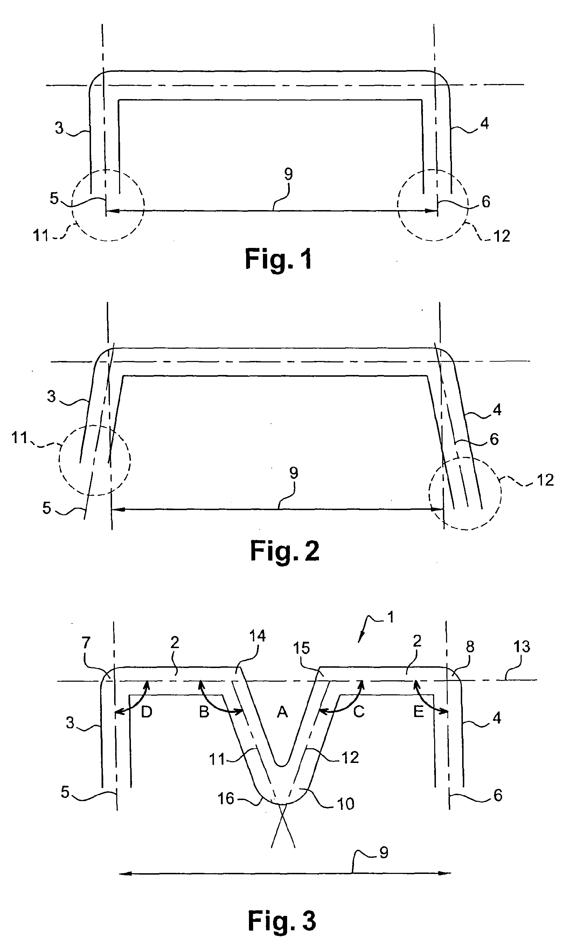

la figure 1 représente un tube sensiblement rigide de l'art antérieur non contraint ;
la figure 2 représente un tube sensiblement rigide de l'art antérieur soumis à une contrainte d'écartement des sections extrêmes longitudinales ;
la figure 3 représente un tube selon l'invention doté d'une circonvolution ;

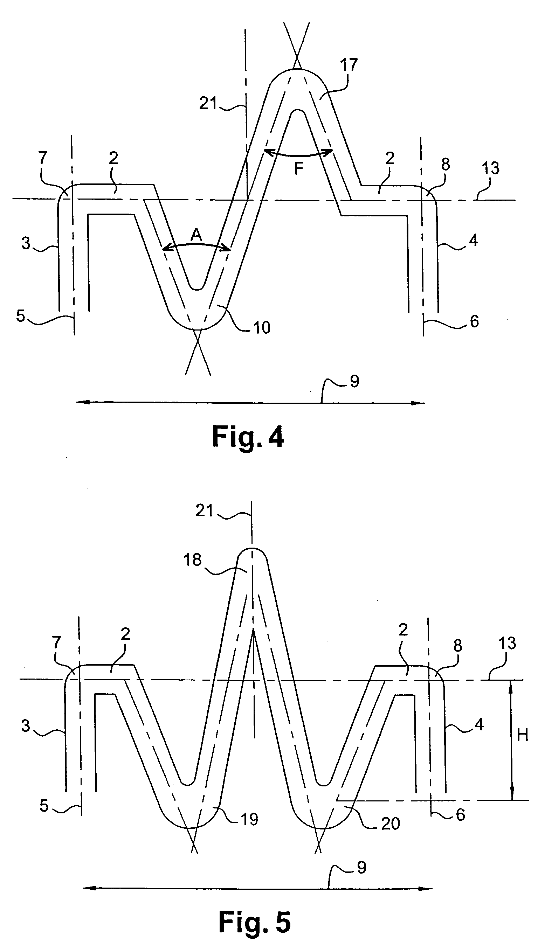

la figure 4 représente un tube selon l'invention doté de deux circonvolutions de concavités respectives opposées ;
la figure 5 représente un tube selon l'invention doté de trois circonvolutions.

Comme annoncé précédemment, l'invention concerne un tube sensiblement rigide principalement utilisé dans le domaine du transport de fluides haute ou moyenne pression. Plus particulièrement, ce tube est utilisé pour les circuits de carburant haute pression.

Le tube de la figure III comprend une première section extrême longitudinale 3 reliée à la première extrémité de la section médiane longitudinale 2 par l'intermédiaire d'un premier coude 7. La seconde extrémité de la section médiane longitudinale 2 est reliée par un second coude 8 à une seconde section extrême longitudinale 4.
Les première 3 et seconde 4 sections extrêmes longitudinales sont respectivement orientées selon les première 5 et seconde 6 orientations.
La section médiane longitudinale 2 est orientée selon un troisième axe d'orientation 13 et comprend un repli ou circonvolution 10. La circonvolution est réalisée par déformation plastique de la section médiane longitudinale 2 de manière que celle ci forme un V ou un U.
Dans le cas particulier de cette figure III, la circonvolution est en forme de V symétrique axé autour d'un plan médian disposé à mi-distance des premier 7 et second 8 coudes. Le V est formé de deux branches rectilignes orientées respectivement selon des quatrième 11 et cinquième 12 axes d'orientation.
L'intersection des branches du V forme un troisième coude 16 dont l'angle d'ouverture A est l'angle compris entre les quatrième 11 et cinquième 12 axes d'orientation.
L'intersection entre les deux branches d'axes 11 et 12 de la circonvolution 10 avec la section médiane 2 longitudinale forme deux coudes respectivement nommés quatrième 14 et cinquième 15 coudes. Le quatrième 14 coude a un angle d'ouverture B défini par l'intersection du troisième axe d'orientation 13 de la section médiane 2 avec le quatrième axe d'orientation 11 de la circonvolution 10.
Le cinquième coude 15 à un angle d'ouverture C défini par l'intersection du troisième axe d'orientation 13 de la section médiane avec le cinquième axe d'orientation 12 de la circonvolution 10.

Chacun des premier 7 et second 8 coudes forme sensiblement un angle droit. L'angle d'ouverture D du premier coude 7 est l'angle formé entre la première orientation 5 et le troisième axe d'orientation 13 de la section médiane 2. L'angle d'ouverture E du second coude 8 est l'angle formé entre la seconde orientation 6 et le troisième axe d'orientation 13 de la section médiane 2.

Les première 5 et seconde 6 orientations sont sensiblement parallèles entre elles et sensiblement perpendiculaires au troisième axe d'orientation 13 de la section médiane 2.

Lorsque le tube 1 est soumis à des efforts tendant à faire varier la distance initiale 9 prédéterminée, les premier 7, deuxième 8, troisième 16, quatrième 14 et cinquième 15 coudes respectivement ouverts selon les angles D, E, A, B, et C sont alors soumis à des contraintes de flexion. Ces contraintes de flexion sont réparties sur plusieurs coudes, et essentiellement sur les troisièmes 16, quatrième 14 et cinquième 15 coudes par un effet de couple amplifié par la longueur de la section médiane 2.
Il est alors possible de faire varier la distance initiale 9 sans modifier de manière notable les première 5 et seconde 6 orientations ainsi que les angles D et E d'ouverture des premier 7 et second 8 coudes.

La caractéristique nouvelle de l'invention qui est de permettre la variation de la distance initiale 9 prédéterminée tout en conservant les orientations 5 et 6 des sections extrêmes 3 et 4 peut être améliorée en augmentant la taille de la circonvolution et ou en augmentant le nombre de circonvolutions 10.

Dans ce contexte, la figure IV représente un mode de réalisation particulier qui reprend le tube 1 représenté à la figure III mais propose l'utilisation d'une section médiane 2 longitudinale comprenant deux circonvolutions 10 et 17 successives. Ces circonvolutions successives 10 et 17 ont des concavités opposées. Les première 10 et seconde 17 circonvolutions sont disposées de part et d'autre d'un plan 21 perpendiculaire au troisième axe d'orientation 13 de la section médiane 2 longitudinale et à mi-distance des premier 7 et second 8 coudes. Ces deux circonvolutions successives forment un S. De la même manière que sur la figure III, la première circonvolution est ouverte selon un angle d'ouverture A. La seconde circonvolution 17 est elle aussi ouverte selon un angle F. Les Angles A et F sont de même module et définissent les concavités des circonvolutions. Ces concavités sont de même dimensions et sont opposées par rapport au troisième axe d'orientation 13.

Lorsque le tube 1 est soumis à des efforts tendant à faire varier la distance initiale 9 prédéterminée entre les premier 7 et second 8 coudes, l'angle d'ouverture A de la première circonvolution 10 et l'angle F de la seconde circonvolution 17 varient en fonction de cette variation de distance 9. Cette variation des angles d'ouvertures A et F permet de limiter les modifications des première 5 et seconde 6 orientations.

Plus précisément, en cas d'augmentation de la distance initiale 9, les angles A et F des première 10 et seconde 17 circonvolutions augmentent également de manière quasi symétrique l'un par rapport à l'autre.

La figure V représente un mode préférentiel de réalisation de l'invention qui est proche des deux modes de réalisation précédemment décrits à la différence qu'il comporte une succession d'un nombre impair de circonvolutions. Une circonvolution centrale 18 est symétrique par rapport à un plan médian 21, et est disposée sur la section médiane longitudinale 2, sensiblement à mi-distance des premier 7 et second 8 coudes. Le plan médian 21 sur lequel est centrée la circonvolution centrale 18 est sensiblement perpendiculaire au troisième axe d'orientation 13.
Les première 20 et seconde 19 circonvolutions latérales sont sensiblement identiques entre elles et sont disposées symétriquement par rapport au plan médian 21 de la circonvolution centrale 18. Chacune de ces circonvolutions est coudée à une hauteur moyenne H qui est proche de la distance maximale des circonvolutions par rapport au troisième axe d'orientation 13.
Les concavités des circonvolutions latérales sont opposées par rapport à la concavité de la circonvolution centrale 18. L'ensemble de ces trois circonvolutions19, 18 et 20 forme un « W ».

Il a été constaté qu'en cas de variation de la distance initiale 9 prédéterminée, la modification des première 5 et seconde 6 orientations est particulièrement faible, voir inexistante lorsque le nombre de concavités est impair et au moins égal à trois. Un constat similaire à été réalisé lorsque la ou les circonvolutions sont disposées symétriquement par rapport au plan médian 21, c'est le cas de cette figure V où les concavités des circonvolutions latérales 19 et 20 sont réparties symétriquement par rapport au plan médian 21 et par rapport à la circonvolution centrale 18 elle-même disposée sur la section médiane 2, à mi-distance des premier 7 et second 8 coudes.

Dans certains cas particuliers proches de celui représenté sur cette figure V, les portions de la section médiane 13 longitudinale séparant les circonvolutions latérales 19 et 20 des premier 7 et second 8 coudes peuvent être extrêmement réduites jusqu'à tendre vers une quasi-continuité entre la circonvolution latérale 19 et le coude 2 qui lui est adjacent.

En cas de variation de la distance initiale 9 prédéterminée, l'angle d'ouverture des circonvolutions et les angles d'ouverture des coudes reliant les circonvolutions à la section médiane varient également et permettent la répartition des efforts de flexion au niveau des zones de flexion privilégiées. Ainsi plus le nombre de circonvolutions est élevé et plus l'amortissement des efforts sera efficace, réduisant ainsi les efforts de flexion au niveau des premier et second coudes. De même l'amortissement des efforts de flexion est également amélioré en augmentant la hauteur H de tout ou partie des circonvolutions.

Enfin, le tube selon la présente invention est habituellement en acier mais peut être réalisé avec d'autres matières métalliques, des matériaux polymères ou composites.

## Revendications

1. Tube (1) sensiblement rigide, notamment pour un circuit hydraulique à haute pression, comprenant une section médiane (2) longitudinale et des première (3) et seconde (4) sections extrêmes longitudinales s'étendant respectivement suivant des première (5) et seconde (6) orientations et séparées de la section médiane (2) par des premier (7) et second (8) coudes respectifs espacés l'un de l'autre par une distance initiale (9) prédéterminée, **caractérisé en ce que** la section médiane comprend au moins un repli (10), ou circonvolution (10), susceptible d'être déplié, ce dont il résulte que la distance entre les premier (7) et second (8) coudes peut être augmentée sans modification des première (5) et seconde orientations (6).

2. Tube (1) suivant la revendication 1, **caractérisé en ce que** les première (3) et seconde (4) sections extrêmes s'étendent parallèlement l'une à l'autre.

3. Tube (1) suivant l'une quelconque des revendications précédentes, **caractérisé en ce que** chacun des premier (7) et second (8) coudes forme sensiblement un angle droit.

4. Tube (1) suivant l'une quelconque des revendications précédentes, **caractérisé en ce qu'**il comprend au moins deux circonvolutions (10, 17) successives de concavités respectives opposées.

5. Tube (1) suivant l'une quelconque des revendications précédentes, **caractérisé en ce qu'**il comprend une succession d'un nombre impair d'au moins trois circonvolutions (18, 19, 20) comprenant une circonvolution centrale (18) et au moins deux circonvolutions latérales (19, 20).

6. Tube suivant la revendication 5, **caractérisé en ce que** la circonvolution centrale (18) est symétrique par rapport à un plan médian (21).

7. Tube suivant la revendication 6, **caractérisé en ce que** la succession de circonvolutions (18, 19, 20) est symétrique par rapport au plan médian (21) de la circonvolution centrale (18).
